# EUROPÄISCHE PATENTSCHRIFT

(11) **EP 3 562 882 B1**
(45) Veröffentlichungstag und Bekanntmachung des Hinweises auf die Patenterteilung: **24.02.2021**
(21) Anmeldenummer: 17821924.2
(22) Anmeldetag: 22.12.2017
(51) Int. Cl.: C08L 67/02, C08L 69/00

(54) **ZUSAMMENSETZUNG UND THERMOPLASTISCHE FORMMASSE MIT GUTER TIEFTEMPERATURZÄHIGKEIT, HOHEM GLANZGRAD UND HOHER VERARBEITUNGSSTABILITÄT**
COMPOSITION AND THERMOPLASTIC MOULDING COMPOSITION WITH GOOD DEGREE OF TOUGHNESS AT A LOW TEMPERATURE, HIGH DEGREE OF GLOSS AND HIGH PROCESSING STABILITY
COMPOSITION ET MATIÈRE À MOULER THERMOPLASTIQUE AYANT UNE BONNE RÉSISTANCE À BASSE TEMPÉRATURE, UN HAUT DEGRÉ DE BRILLANCE ET UNE HAUTE STABILITÉ AU TRAITEMENT

(30) Priorität: 28.12.2016 EP 16207059
(43) Veröffentlichungstag der Anmeldung: 06.11.2019
(73) Patentinhaber: Covestro Intellectual Property GmbH & Co. KG, 51373 Leverkusen (DE)
(72) Erfinder: SEIDEL, Andreas, 41542 Dormagen (DE); HOBEIKA, Sven, 42699 Solingen (DE); HUFEN, Ralf, 47239 Duisburg (DE); ECKEL, Thomas, 41540 Dormagen (DE)
(74) Vertreter: Levpat
(86) Internationale Anmeldenummer: PCT/EP2017/084284
(87) Internationale Veröffentlichungsnummer: WO 2018/122140

(56) Entgegenhaltungen:
- DE-A1- 3 413 751
- DE-A1- 19 828 538

## Beschreibung

Die vorliegende Erfindung betrifft eine Zusammensetzung, insbesondere eine Polycarbonat-Zusammensetzung, zur Erzeugung einer thermoplastischen Formmasse, ein Verfahren zur Herstellung der thermoplastischen Formmasse, die Formmasse selbst, die Verwendung der Zusammensetzung oder Formmasse zur Herstellung von Formkörpern und die Formkörper selbst.

Polycarbonat-Zusammensetzungen sind seit langem bekannt und aus diesen Materialien werden für eine Vielzahl von Anwendungen Formkörper hergestellt, beispielsweise im Automobilbereich, für Schienenfahrzeuge, für den Bausektor, im Bereich Elektro/Elektronik und bei Haushaltsgeräten. Durch Variation der Menge und Art der Rezepturbestandteile lassen sich die Zusammensetzungen und damit auch die hergestellten Formkörper in weiten Bereichen hinsichtlich ihrer thermischen, rheologischen und mechanischen Eigenschaften an die Anforderungen der jeweiligen Anwendung anpassen.

Manche neben Polycarbonat als weitere Bestandteile enthaltenen Polymerkomponenten wie Vinyl(co)polymerisate weisen eine Teilverträglichkeit zu Polycarbonat auf. Daher werden häufig Phasenverträglichkeitsvermittler beispielsweise in Form von Copolymeren enthaltend funktionelle Gruppen eingesetzt, um mechanische Eigenschaften der aus den thermoplastischen Formmassen hergestellten Formkörpern zu verbessern.

DE 3413751 A1 offenbart thermoplastische Formmassen enthaltend Polycarbonat, Pfropfpolymerisate, kautschukfreie Copolymerisate und gegebenenfalls Copolymerkautschuke sowie gegebenenfalls übliche Additive, die dadurch gekennzeichnet sind, dass die kautschukfreien Copolymerisate Epoxidverbindungen einpolymerisiert enthalten. Die aus den Formmassen hergestellten Formkörper zeichnen sich durch eine hohe Temperaturbelastungsgrenze, verbesserte Wärmeformbeständigkeit bei guter Zähigkeit und eine homogene matte Oberflächenqualität aus.

EP 1 069 156 B1 offenbart flammwidrige thermoplastische Zusammensetzungen enthaltend Polycarbonat, Styrol-Pfropfpolymer, Styrol-Copolymer, SAN-gepfropftes Polycarbonat oder Polycarbonat-gepfropftes SAN und Phosphorsäureester. Die Zusammensetzungen weisen eine verbesserte Flammwidrigkeit und verbesserte mechanische Eigenschaften auf und eignen sich für Gehäuse elektrischer bzw. elektronischer Geräte.

US 4885335 A offenbart Zusammensetzungen enthaltend Polycarbonat, ein Acrylnitril-Styrol-Acrylat Copolymer und ein Glycidylmethacrylat Copolymer zur Glanzreduktion.

EP 0 375 941 A1 offenbart einen Thermoplasten mit guten physikalischen Eigenschaften aus Polycarbonat, ABS und einem Glycidylmethacrylat Copolymer. Die Formkörper weisen einen geringen Oberflächenglanz auf.

EP 0 549 205 B1 offenbart Polycarbonatharz-Zusammensetzungen mit einem geringen Glanz und einer hervorragenden mechanischen Festigkeit. Die Zusammensetzungen enthalten Polycarbonat, ein Styrolharz, ein Additionspolymer mit Einheiten, die von Glycidylmethacrylat abgeleitet sind und eine organische Säure.

So offenbart EP 1 854 842 B1 Styrolharz-Zusammensetzungen enthaltend Polycarbonat, ein Harz auf Styrolbasis, beispielsweise ABS, ein modifiziertes Polymer auf Styrolbasis enthaltend Monomereinheiten auf Vinylbasis mit funktionellen Gruppen. Die Zusammensetzungen eignen sich für die Spritzgussverarbeitung, weisen exzellente mechanische Eigenschaften, Fließfähigkeit, Chemikalienbeständigkeit und Galvanisierbarkeit auf und lassen sich leicht flammwidrig ausrüsten.

In den Dokumenten aus dem Stand der Technik wird offenbart, dass durch den Einsatz einer Polymerkomponente mit funktionellen Gruppen neben guten mechanischen Eigenschaften eine Reduktion des Oberflächenglanzes erhalten wird. Es wird nicht gezeigt, wie trotz Verwendung eines solchen Phasenverträglichkeitsvermittlers der Glanzgrad auf hohem Niveau gehalten werden kann. Weiterhin gibt es im Stand der Technik keinen Hinweis auf ein gute Stabilität des hohen Glanzgrades auch bei erhöhten Verarbeitungstemperaturen im Spritzgussverfahren.

Es war also wünschenswert, Zusammensetzungen und daraus hergestellte Formmassen bereitzustellen, die die Erzeugung von Formkörpern mit guten mechanischen Eigenschaften, besonders mit guter Tieftemperaturkerbschlagzähigkeit erlauben und bei denen die Formkörper einen sehr hohen Oberflächenglanz und eine gute Verarbeitungsstabilität aufweisen. Unter Verarbeitungsstabilität ist zu verstehen, dass ein hoher Glanzgrad auch dann erreicht wird, wenn die Formkörper bei erhöhten Temperaturen wie etwa 300 °C im Spritzgussverfahren erzeugt werden und der Glanzgrad zwischen einer Spritzgusstemperatur von 260 °C und 300 °C nicht signifikant variiert. Der Glanzgrad sollte sowohl bei einer Spritzgusstemperatur von 260 °C als auch 300 °C mindestens 90 unter einem Beobachtungswinkel von 60° betragen und um weniger als 8 % in diesem Temperaturintervall variieren. Bevorzugt sollte der Glanzgrad sowohl bei einer Spritzgusstemperatur von 260 °C als auch 300 °C mindestens 95 unter einem Beobachtungswinkel von 60° betragen und um weniger als 5 % in diesem Temperaturintervall variieren.

Es wurde nun überraschenderweise gefunden, dass eine Zusammensetzung und eine daraus hergestellte thermoplastische Formmasse, wobei die Zusammensetzung folgende Bestandteile enthält oder aus diesen besteht,
A) 30 bis 90 Gew.-%, bevorzugt 40 bis 80 Gew.-%, besonders bevorzugt 50 bis 75 Gew.-% mindestens eines Polymers ausgewählt aus der Gruppe bestehend aus aromatischem Polycarbonat und aromatischem Polyestercarbonat,
B) 5 bis 65 Gew.-% , bevorzugt 10 bis 50 Gew.-%, besonders bevorzugt 15 bis 45 Gew.-% Polymer, das frei ist von Epoxidgruppen, bestehend aus
   B1) kautschukmodifiziertem Vinyl(co)polymerisat hergestellt im Emulsionspolymerisationsverfahren unter Verwendung eines Redox-Initiatorsystems bestehend aus einem organischen Oxidationsmittel und einem Reduktionsmittel und
   B2) optional kautschukfreiem Vinyl(co)polymerisat,
C) 0,5 bis 10 Gew.-%, bevorzugt 1 bis 8 Gew.-%, besonders bevorzugt 2 bis 7 Gew.-% eines Polymers enthaltend auf Styrol und einem Epoxidgruppen-haltigem Vinylmonomer zurückgehende Strukturelemente,
D) 0 bis 20 Gew.-%, bevorzugt 0,1 bis 15 Gew.-%, besonders bevorzugt 0,2 bis 10 Gew.-% eines oder mehrerer weiterer Additive,
wobei die Komponente C ein Gewichtsverhältnis von auf
Styrol zu auf Epoxidgruppen-haltigem Vinylmonomer zurückgehenden Strukturelementen von 100:1 bis 1:1, bevorzugt von 10:1 bis 1:1, weiter bevorzugt von 5:1 bis 1:1, am meisten bevorzugt von 3:1 bis 1:1 aufweist,
das gewünschte Eigenschaftsprofil hat.

### Komponente A

Erfindungsgemäß wird die Komponente A) ausgewählt aus mindestens einem Polymer aus der Gruppe bestehend aus aromatischem Polycarbonat und aromatischem Polyestercarbonat, in an meisten bevorzugter Ausführungsform handelt es sich bei Komponente A) um aromatisches Polycarbonat oder eine Mischung verschiedener aromatischer Polycarbonate.

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben mittlere Molekulargewichte Mw bestimmt durch GPC (Gelpermeationschromatographie in Methylenchlorid mit Polycarbonat als Standard) von 15.000 g/mol bis 50.000 g/mol, bevorzugt von 20.000 g/mol bis 35.000 g/mol, besonders bevorzugt von 23.000 g/mol bis 33.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäurees terstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 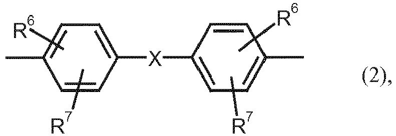 in der
- R⁶ und R⁷: unabhängig voneinander für H, C₁- bis C₁₈ -Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈ -Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

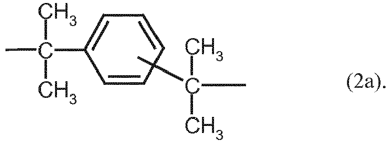

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan (Bisphenol A), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).
Insbesondere bevorzugt ist 2,2-Bis-(4-hydroxyphenyl)-propan (Bisphenol-A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Die als Komponente A erfindungsgemäß geeigneten Polycarbonate weisen eine OH-Endgruppenkonzentration von 10 bis 1000 ppm, bevorzugt 20 bis 500 ppm, besonders bevorzugt 30 bis 150 ppm auf.

Die Bestimmung der OH-Endgruppenkonzentration erfolgt photometrisch gemäß Horbach, A.; Veiel, U.; Wunderlich, H., Makromolekulare Chemie 1965, Band 88, S. 215-231.

Am meisten bevorzugt kommt als Komponente A aromatisches Polycarbonat auf Basis von Bisphenol A zum Einsatz.

### Komponente B

Die Komponente B besteht aus B1 und optional B2. Falls die Komponente B aus B1 und B2 besteht, so beträgt der Anteil von B1 in der Komponente B mindestens 20 Gew.-%, bevorzugt mindestens 30 Gew.-%, besonders bevorzugt mindestens 40 Gew.-%. Sowohl die Komponente B1 als auch die Komponenten B2 enthalten keine Epoxidgruppen.

### Komponente B1

Bei der Komponente B1 handelt es sich um kautschukhaltige Pfropfpolymerisate, hergestellt im Emulsionspolymerisationsverfahren, von in bevorzugter Ausführungsform,
B1.1) 5 bis 95 Gew.-%, vorzugsweise 10 bis 70 Gew.-%, besonders bevorzugt 20 bis 60 Gew.-%, bezogen auf die Komponente B1, einer Mischung aus
   B1.1.1) 65 bis 85 Gew.-%, bevorzugt 70 bis 80 Gew.-%, bezogen auf B1.1, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat) und
   B1.1.2) 15 bis 35 Gew.-%, bevorzugt 20 bis 30 Gew.-%, bezogen auf B1.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(Cl-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
   auf
B1.2) 95 bis 5 Gew.-%, vorzugsweise 90 bis 30 Gew.-%, besonders bevorzugt 80 bis 40 Gew.-%, bezogen auf die Komponente B1, wenigstens einer elastomeren Pfropfgrundlage.

Die Pfropfgrundlage hat bevorzugt eine Glasübergangstemperatur < 0°C, weiter bevorzugt < - 20°C, besonders bevorzugt <-60°C.

Die Glasübergangstemperatur wird, sofern in der vorliegenden Anmeldung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die Pfropfpartikel in der Komponente B1 weisen bevorzugt eine mittlere Teilchengröße (D50-Wert) von 0,05 bis 1 µm, vorzugsweise von 0,1 bis 0,6 µm, besonders bevorzugt von 0,2 bis 0,5 µm auf.

Die mittlere Teilchengröße D50 ist der Durchmesser, oberhalb und unterhalb dessen jeweils 50 Gew.-% der Teilchen liegen. Sie wird, soweit in der vorliegenden Anmeldung nicht explizit anders angegeben, mittels Ultrazentrifugenmessung (W. Scholtan, H. Lange, Kolloid, Z. und Z. Polymere 250 (1972), 782-1796) bestimmt.

Bevorzugte Monomere B1.1.1 sind ausgewählt aus mindestens einem der Monomere Styrol, α-Methylstyrol und Methylmethacrylat, bevorzugte Monomere B1.1.2 sind ausgewählt aus mindestens einem der Monomere Acrylnitril, Maleinsäureanhydrid und Methylmethacrylat. Besonders bevorzugte Monomere sind B1.1.1 Styrol und B1.1.2 Acrylnitril.

Für die Pfropfpolymerisate B1 geeignete Pfropfgrundlagen B1.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) verknüpft sind.

Bevorzugte Pfropfgrundlagen B1.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß B1.1.1 und B1.1.2) und Mischungen aus den zuvor genannten Kautschuktypen.

Besonders bevorzugt sind reiner Polybutadienkautschuk und Styrol-Butadien-Blockcopolymerkautschuk.
Der Gelanteil der Pfropfpolymerisate beträgt mindestens 40 Gew.-%, bevorzugt mindestens 80 Gew.-%, besonders bevorzugt mindestens 90 Gew.-% (gemessen in Aceton).

Der Gelgehalt der Pfropfpolymerisate wird, soweit in der vorliegenden Erfindung nicht anders angegeben, bei 25°C als in Aceton als Lösungsmittel unlöslicher Anteil bestimmt (M. Hoffmann, H. Krömer, R. Kuhn, Polymeranalytik I und II, Georg Thieme-Verlag, Stuttgart 1977).

Die Pfropfpolymerisate B1 werden hergestellt durch radikalische Polymerisation im Emulsionspolymerisationsverfahren.

Dabei wird das erfindungsgemäß einzusetzende Pfropfpolymerisat B1 durch Redox-Initiierung hergestellt.

Erfindungsgemäß geeignete Redoxinitiatorsysteme bestehen aus einem organischen Oxidationsmittel und einem Reduktionsmittel, wobei im Reaktionsmedium zusätzlich Schwermetallionen vorhanden sein können; vorzugsweise wird ohne Schwermetallionen gearbeitet.

Erfindungsgemäß geeignete organische Oxidationsmittel sind beispielsweise und bevorzugt Di-tert.-butylperoxid, Cumolhydroperoxid, Dicyclohexylpercarbonat, tert.-Butylhydroperoxid, p-Menthanhydroperoxid oder Mischungen hieraus, besonders bevorzugt sind Cumolhydroperoxid und tert.-Butylhydroperoxid, am meisten bevorzugt tert.-Butylhydroperoxid An Stelle des organischen Oxidationsmittel kann auch H₂O₂ als Oxidationsmittel im Redoxinitiatorsystem verwendet werden.

Erfindungsgemäß einsetzbare Reduktionsmittel sind vorzugsweise wasserlösliche Verbindungen mit reduzierender Wirkung, vorzugsweise ausgewählt aus der Gruppe der Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit™C (Natriumformaldehydsulfoxylat), Mono- und Dihydroxyaceton, Zucker (z.B. Glucose oder Dextrose). Prinzipiell möglich ist auch die Verwendung von z.B. Eisen(II)-salzen wie z.B. Eisen(II)-sulfat, Zinn(II)-salzen wie z.B. Zinn(II)-chlorid, Titan(III)-salzen wie Titan(III)-sulfat; vorzugsweise werden jedoch keine derartigen Metallsalze verwendet.

Besonders bevorzugte Reduktionsmittel sind Dextrose, Ascorbinsäure(salze) oder Natriumformaldehydsulfoxylat (Rongalit™ C), am meisten bevorzugt sind Ascorbinsäuresalze.

In der Regel werden die Polymerisationsinitiatoren in einer Menge von 0,05 bis 1 Gew.-%, bezogen auf die Pfropfauflage-Monomeren (B1.1), eingesetzt.

Die Herstellung der erfindungsgemäßen Komponente B1 wird beispielsweise in DE 198 28 538 A1 beschrieben.

Das Pfropfpolymerisat B1 umfasst herstellungsbedingt im Allgemeinen freies, d.h. nicht chemisch an die Kautschukgrundlage gebundenes Copolymerisat aus B1.1.1 und B1.1.2, welches sich dadurch auszeichnet, dass es in geeigneten Lösungsmitteln (z.B. Aceton) gelöst werden kann. Bevorzugt enthält die Komponente B1 ein freies Copolymerisat aus B1.1.1 und B1.1.2, welches ein gewichtsgemitteltes Molekulargewicht (Mw), bestimmt per Gelpermeationschromatographie mit Polystyrol als Standard, von bevorzugt 30000 bis 150000 g/mol, besonders bevorzugt von 40000 bis 120000 g/mol aufweist.

### Komponente B2

Die Zusammensetzung kann als weitere Komponente B2 optional kautschukfreie Vinyl(Co)Polymerisate, bevorzugt von mindestens einem Monomeren aus der Gruppe der Vinylaromaten, Vinylcyanide (ungesättigte Nitrile), (Meth)Acrylsäure-(C1 bis C8)-Alkylester, ungesättigte Carbonsäuren sowie Derivate (wie Anhydride und Imide) ungesättigter Carbonsäuren enthalten.

Insbesondere geeignet sind als Komponente B2 (Co)Polymerisate aus
B2.1 50 bis 99 Gew.-%, bevorzugt 65 bis 85 Gew.-%, besonders bevorzugt 70 bis 80 Gew.-% bezogen auf das (Co)Polymerisat B2 mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und
B2.2 1 bis 50 Gew.-%, bevorzugt 15 bis 35 Gew.-%, besonders bevorzugt 20 bis 30 Gew.-% bezogen auf das (Co)Polymerisat B2 mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate B2 sind harzartig, thermoplastisch und kautschukfrei. Besonders bevorzugt ist das Copolymerisat aus B2.1 Styrol und B2.2 Acrylnitril.

Derartige (Co)Polymerisate B2 sind bekannt und lassen sich durch radikalische Polymerisation, insbesondere durch Emulsions-, Suspensions-, Lösungs- oder Massepolymerisation herstellen.

Die (Co)Polymerisate B2 besitzen ein gewichtsgemitteltes Molekulargewicht (Mw), bestimmt per Gelpermeationschromatographie mit Polystyrol als Standard, von bevorzugt 50000 bis 250000 g/mol, besonders bevorzugt von 70000 bis 200000 g/mol, besonders bevorzugt von 80000 bis 170000 g/mol.

### Komponente C

Die Zusammensetzung enthält als Komponente C mindestens ein Polymer enthaltend Struktureinheiten abgeleitet von Styrol und
Struktureinheiten abgeleitet von einem Epoxidgruppen enthaltenden Vinylmonomeren.

Unter Epoxidgruppen werden im Rahmen der vorliegenden Anmeldung folgende Struktureinheiten verstanden: 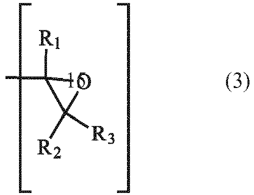 wobei R1, R2 und R3 unabhängig voneinander Wasserstoff oder Methyl sind, bevorzugt sind mindestens zwei der Reste R1, R2 und R3 Wasserstoff, besonders bevorzugt sind alle Reste R1, R2 und R3 Wasserstoff.

Solche zur Herstellung der Komponente C einzusetzende Vinylmonomere enthaltend Epoxidgruppen sind beispielsweise Glycidylacrylat, Glycidylmethacrylat, Glycidylethacrylat, Glycidylitaconat, Allylglycidylether, Vinylglycidylether, Vinylbenzylglycidylether oder Propenylglycidylether.

Insbesondere bevorzugt ist Glycidylmethacrylat.

In einer bevorzugten Ausführungsform enthält Komponente C ein Polymer hergestellt durch Copolymerisation von Styrol und mindestens einem mit Styrol copolymerisierbaren Epoxidgruppen enthaltenden Vinylmonomeren.

In einer bevorzugten Ausführungsform wird bei der Herstellung dieser Polymere gemäß Komponente C neben Styrol und dem Epoxidgruppen enthaltenden Vinylmonomeren mindestens ein weiteres mit diesen Monomeren copolymerisierbares Epoxidgruppen-freies Vinylmonomer eingesetzt. Diese weiteren Vinylmonomere sind ausgewählt aus der Gruppe bestehend aus Vinylaromaten (wie beispielsweise α-Methylstyrol), kernsubstituierten Vinylaromaten (wie beispielsweise p-Methylstyrol, p-Chlorstyrol), (Meth)Acrylsäure-(C1-C8)-Alkylestern (wie beispielsweise Methylmethacrylat, n-Butylacrylat, tert.-Butylacrylat), Vinylcyaniden (wie beispielsweise Acrylnitril und Methacrylnitril), ungesättigten Carbonsäuren (beispielsweise Maleinsäure und N-Phenyl-Maleinsäure) und Derivaten ungesättigter Carbonsäuren (beispielsweise Maleinsäureanhydrid und N-Phenyl-Maleinimid).

Insbesondere bevorzugt wird als weiteres copolymerisierbares Vinylmonomer Acrylnitril eingesetzt.

In einer weiter bevorzugten Aus führungs form enthält die Komponente C mindestens ein Polymer enthaltend von Styrol, Acrylnitril und Glycidylmethacrylat abgeleitete Struktureinheiten, in besonders bevorzugter Ausführungsform ein Polymer bestehend aus von Styrol, Acrylnitril und Glycidylmethacrylat abgeleitete Struktureinheiten.

Falls neben von Styrol abgeleiteten und von dem Epoxidgruppen-haltigem Vinylmonomeren abgeleiteten Struktureinheiten zusätzlich von einem weiteren Epoxidgruppen-freien Vinylmonomeren abgeleitete Struktureinheiten wie oben beschrieben in der Komponente C enthalten sind, so liegt das Gewichtsverhältnis zwischen den von Styrol abgeleiteten Struktureinheiten und den von dem weiteren Vinylmonomeren abgeleiteten Struktureinheiten im Bereich von 99:1 bis 50:50, bevorzugt im Bereich von 85:15 bis 60:40.

In einer weiteren Ausführungsform enthält die Komponente C von Styrol, Acrylnitril und Glycidylmethacrylat abgeleitete Struktureinheiten, wobei das Gewichtsverhältnis der von Styrol abgeleiteten Struktureinheiten zu von Acrylnitril abgeleiteten Struktureinheiten 99:1 bis 50:50, bevorzugt 85:15 bis 60:40 beträgt.

In einer bevorzugten Ausführungsform enthält die Komponente C ein Polymer hergestellt durch Copolymerisation aus Styrol, Acrylnitril und Glycidylmethacrylat, wobei das Gewichtsverhältnis von Styrol zu Acrylnitril 99:1 bis 50:50, bevorzugt 85:15 bis 60:40 beträgt.

Die Herstellung der Polymere gemäß Komponente C aus Styrol und mindestens einem mit Styrol copolymerisierbaren Vinylmonomeren enthaltend Epoxidgruppen erfolgt bevorzugt durch radikalisch initiierte Polymerisation, beispielsweise durch die bekannte Lösungspolymerisation in organischen Kohlenwasserstoffen. Dabei sind bevorzugt solche Bedingungen einzuhalten, dass eine Hydrolyse der Epoxidgruppen zumindest weitgehend vermieden wird. Geeignete und bevorzugte Bedingungen hierfür sind beispielsweise niedrige Gehalte an polaren Lösungsmitteln wie Wasser, Alkohol, Säuren oder Basen und Arbeiten in Lösungsmitteln aus der Gruppe der organischen Kohlenwasserstoffe, die gegenüber Epoxidgruppen inert sind, wie z.B. Toluol, Ethylbenzol, Xylol, hochsiedende Aliphaten, Ester oder Ether.
Ein alternatives Herstellverfahren ist die ebenfalls bekannte thermisch oder radikalisch initiierte, bevorzugt kontinuierliche Substanzpolymerisation bei Temperaturen von bevorzugt 40 bis 150°C, insbesondere bevorzugt 80 bis 130°C und mit optional nur partiellem Monomerumsatz, so dass das gewonnene Polymer als Lösung im Monomerensystem anfällt.

Als Komponente C kann auch ein Block- oder Pfropfpolymere eingesetzt werden, welches Struktureinheiten abgeleitet von Styrol und mindestens einem Epoxidgruppen enthaltenden Vinylmonomeren enthält. Solche Block- oder Pfropfpolymere werden beispielsweise hergestellt durch radikalisch initiierte Polymerisation von Styrol und optional weiteren copolymerisierbaren Vinylmonomeren in Anwesenheit eines Polymers ausgewählt aus der Gruppe bestehend aus Polycarbonat, Polyester, Polyestercarbonat, Polyolefin, Polyacrylat und Polymethacrylat.

In bevorzugter Ausführungsform kommen hier solche Block- oder Pfropfpolymere zum Einsatz hergestellt durch radikalisch initiierte Polymerisation von Styrol, einem Epoxidgruppen enthaltenden Vinylmonomeren und optional weiteren copolymerisierbaren epoxidgruppenfreien Vinylmonomeren in Anwesenheit eines Polymers ausgewählt aus der Gruppe bestehend aus Polycarbonat, Polyester, Polyestercarbonat, Polyolefin, Polyacrylat und Polymethacrylat. Diese Polymere können ebenfalls Epoxidgruppen enthalten, welche im Falle der Polyolefine, Polyacrylate und Polymethacrylate bevorzugt durch Copolymerisation mit Epoxidgruppen enthaltenden Vinylmonomeren erhalten werden.

Als Epoxidgruppen enthaltende Vinylmonomere und als weitere copolymerisierbare Epoxidgruppen-freie Vinylmonomeren kommen in solchen Block- oder Pfropfpolymeren die oben genannten Monomere zum Einsatz.

In einer besonders bevorzugten Ausführungsform kommt ein Block- oder Pfropfpolymer zum Einsatz hergestellt durch radikalisch initiierte Polymerisation von Styrol, Glycidylmethacrylat und Acrylnitril in Anwesenheit eines Polycarbonats, wobei Styrol und Acrylnitril in einem Gewichtsverhältnis von 85:15 bis 60:40 eingesetzt werden.

Derartige Block- oder Pfropfpolymeren werden beispielsweise erhalten, indem das oben genannte Polymer ausgewählt aus der Gruppe bestehend aus Polycarbonat, Polyester, Polyestercarbonat, Polyolefin, Polyacrylat und Polymethacrylat in der Monomerenmischung aus Styrol und optional mit Styrol copolymerisierbaren Vinylmonomeren, darunter optional und bevorzugt auch Epoxidgruppen enthaltendes Vinylmonomer aufgequollen oder gelöst wird, wobei zu diesem Zwecke optional auch ein bevorzugt nicht-wässriges Colösungmittel eingesetzt werden kann, und mit einem organischen Peroxid als Initiator für eine radikalische Polymerisation durch Temperaturerhöhung und anschließende Schmelzecompoundierung zur Reaktion gebracht wird.

In einer anderen Ausführungsform kann als Komponente C ein Block- oder Pfropfpolymer eingesetzt werden hergestellt durch Reaktion eines Polymers enthaltend Struktureinheiten abgeleitet von Styrol und von einem Epoxidgruppen-haltigen Vinylmonomeren mit einem OH-Gruppen enthaltenden Polymeren ausgewählt aus der Gruppe bestehend aus Polycarbonat, Polyester und Polyestercarbonat.

Bei der Herstellung der Block-oder Pfropfpolymere kann es vorkommen, dass nicht alle Polymerketten ausgewählt aus der Gruppe bestehend aus Polycarbonat, Polyester, Polyestercarbonat, Polyolefin, Polyacrylat und Polymethacrylat mit Styrol und den optional weiteren Vinylmonomeren Block-oder Pfropfpolymere bilden.
Unter der Komponente C werden in diesen Fällen auch solche Polymergemische verstanden, die durch die beschriebenen Herstellungsmethoden erhalten werden und in denen auch Homopolymere ausgewählt aus Polycarbonat, Polyester, Polyestercarbonat, Polyolefin, Polyacrylat und Polymethacrylat und den aus Styrol und den optionalen weiteren mit Styrol copolymerisierbaren Vinylmonomeren erhaltenen Styrol(co)polymeren vorliegen.

Komponente C kann auch eine Mischung mehrerer der zuvor beschriebenen Komponenten sein.

Die Komponente C weist ein Gewichtsverhältnis von auf Styrol zu auf Epoxidgruppen-haltigem Vinylmonomer zurückgehenden Strukturelementen von 100:1 bis 1:1, bevorzugt von 10:1 bis 1:1, weiter bevorzugt von 5:1 bis 1:1, am meisten bevorzugt von 3:1 bis 1:1 auf.

Die Komponente C weist einen Epoxidgehalt gemessen nach ASTM D 1652-11 (Version 2011) in Dichlormethan von 0,1 bis 5 Gew.-%, bevorzugt 0,3 bis 3 Gew.-%, besonders bevorzugt 1 bis 3 Gew.-% auf.

Kommerziell erhältliche Pfropf-oder Blockpolymere, die als Komponente C eingesetzt werden können, sind beispielsweise Modiper™ CL430-G, Modiper™ A 4100 und Modiper™ A 4400 (jeweils NOF Corporation, Japan). Bevorzugt wird Modiper™ CL430-G eingesetzt.

### Komponente D

Die Zusammensetzung kann als Komponente D ein oder mehrere weitere Additive enthalten, bevorzugt ausgewählt aus der Gruppe bestehend aus Flammschutzmitteln, Antidrippingmitteln, Flammschutzsynergisten, Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren und Säure-/Basenquenchern), Fließfähigkeitspromotoren, Verträglichkeitsvermittlern, weiteren von Komponente B verschiedene Schlagzähigkeitsmodifikatoren (sowohl mit als auch ohne Kern-Schale-Struktur), weitere polymeren Bestandteilen (beispielsweise funktionelle Blendpartnern), Füll- und Verstärkungsstoffen (beispielsweise Karbonfasern, Talk, Glimmer, Kaolin, CaCO₃) sowie Farbstoffen und Pigmenten (beispielsweise Titandioxid oder Eisenoxid).

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

Die Komponente D kann von Komponente B1 verschiedene Schlagzähmodifikatoren enthalten, beispielsweise Schlagzähmodifikatoren hergestellt durch Masse-, Lösungs-, oder Suspensionspolymerisation oder Schlagzähmodifikatoren hergestellt durch Emulsionspolymerisation unter Verwendung eines Initiatorsystems, welches von den Redox-Initiatorsystemen, die bei der Herstellung der Komponente B1 eingesetzt werden, verschieden sind. Als solche Initiatorsysteme eignen sich beispielsweise Persulfat-Verbindungen, wie beispielsweise Ammoniumperoxodisulfat, Kaliumperoxodisulfat, Natriumperoxodisulfat oder Mischungen daraus.

Die mittlere Teilchengröße (D50-Wert) von diesen weiteren Schlagzähmodifikatoren hergestellt durch Emulsionspolymerisation beträgt 0,05 bis 1 µm, vorzugsweise von 0,1 bis 0,6 µm, besonders bevorzugt von 0,2 bis 0,5 µm.

Bevorzugt kommen in der Komponente D von Komponente B1 verschiedene Schlagzähmodifikatoren vom ABS Typ zum Einsatz.

Die in Komponente D optional enthaltenen Schlagzähmodifikatoren hergestellt durch Masse-, Lösungs-, oder Suspensionspolymerisation weisen einen mittleren Kautschukpartikeldurchmesser D50 von 0,1 bis 2 µm, bevorzugt von 0,3 bis 1,5 µm, am meisten bevorzugt von 0,4 bis 0,7 µm auf.

Falls solche weiteren Schlagzähmodifikatoren, hergestellt durch Masse-, Lösungs-, oder Suspensionspolymerisation in der Komponente D enthalten sind, so beträgt deren Anteil bevorzugt höchstens 50 Gew.-%, weiter bevorzugt höchstens 20 Gew.-%, besonders bevorzugt höchstens 10 Gew.-%, am meisten bevorzugt 0 Gew.-%, jeweils bezogen auf die Summe der Schlagzähmodifikatoren hergestellt durch Masse-, Lösungs-, oder Suspensionspolymerisation und Komponente B1.

Besonders bevorzugt sind die Zusammensetzungen frei von solchen Schlagzähmodifikatoren hergestellt durch Masse-, Lösungs-, oder Suspensionspolymerisation.

Falls in Komponente D weitere von Komponente B1 verschiedene Schlagzähmodifikatoren enthalten sind, hergestellt durch Emulsionspolymerisation unter Verwendung eines Initiatorsystems, welches von den Redox-Initiatorsystemen, die bei der Herstellung der Komponente B1 eingesetzt werden, verschieden sind, so beträgt deren Anteil bevorzugt höchstens 30 Gew.-%, weiter bevorzugt höchstens 20 Gew.-%, besonders bevorzugt höchstens 10 Gew.-%, am meisten bevorzugt 0 Gew.-%, jeweils bezogen auf die Summe aller Schlagzähmodifikatoren hergestellt durch Emulsionspolymerisation.

Weiter bevorzugt enthält Komponente D keine von Komponente B1 verschiedene Schlagzähmodifikatoren.

In bevorzugter Ausführungsform enthält die Zusammensetzung mindestens ein Polymeradditiv ausgewählt aus der Gruppe bestehend aus Gleit-/Entformungsmitteln und Stabilisatoren.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Weiter bevorzugte Zusammensetzungen enthalten als Entformungsmittel Pentaerythrittetrastearat, und als Stabilisator eine Kombination aus Octadecyl 3-(3,5-di-tert-butyl-4-hydroxyphenyl)propionat und Tris(2,4-di-tert-butylphenyl)phosphit.

### Herstellung der Formmassen und Formkörper

Aus den erfindungsgemäßen Zusammensetzungen können thermoplastische Formmassen hergestellt werden.
Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.
Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen r eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Nachfolgend werden weitere Ausführungsformen 1 bis 42 der vorliegenden Erfindung beschrieben:
1. Zusammensetzung zur Erzeugung einer thermoplastischen Formmasse, wobei die Zusammensetzung folgende Bestandteile enthält oder aus diesen besteht
   A) 30 bis 90 Gew.-% mindestens eines Polymers ausgewählt aus der Gruppe bestehend aus aromatischem Polycarbonat und aromatischem Polyestercarbonat,
   B) 5 bis 65 Gew.-% Polymer, das frei ist von Epoxidgruppen, bestehend aus B1
      ) kautschukmodifiziertem Vinyl(co)polymerisat hergestellt im
      Emulsionspolymerisationsverfahren unter Verwendung eines Redox-Initiatorsystems bestehend aus einem organischen Oxidationsmittel und einem Reduktionsmittel und B2) optional kautschukfreiem Vinyl(co)polymerisat,
   C) 0,5 bis 10 Gew.-% eines Polymers enthaltend auf Styrol und einem Epoxidgruppen-haltigem Vinylmonomer zurückgehende Strukturelemente,
   D) 0 bis 20 Gew.-% eines oder mehrerer weiterer Additive,
   wobei die Komponente C ein Gewichtsverhältnis von auf Styrol zu auf Epoxidgruppen-haltigem Vinylmonomer zurückgehenden Strukturelementen von 100:1 bis 1:1 aufweist.
2. Zusammensetzung gemäß Ausführungsform 1, wobei die Komponente C ein Gewichtsverhältnis von auf Styrol zu auf Epoxidgruppen-haltigem Vinylmonomer zurückgehenden Strukturelementen von 10:1 bis 1:1 aufweist.
3. Zusammensetzung gemäß Ausführungsform 1, wobei die Komponente C ein Gewichtsverhältnis von auf Styrol zu auf Epoxidgruppen-haltigem Vinylmonomer zurückgehenden Strukturelementen von 5:1 bis 1:1 aufweist
4. Zusammensetzung gemäß Ausführungsform 1, wobei die Komponente C ein Gewichtsverhältnis von auf Styrol zu auf Epoxidgruppen-haltigem Vinylmonomer zurückgehenden Strukturelementen von 3:1 bis 1:1 aufweist.
5. Zusammensetzung gemäß einer der vorherigen Ausführungsformen, wobei die Komponente A einen Gewichtsanteil an phenolischen OH-Gruppen von 10 bis 1000 ppm aufweist.
6. Zusammensetzung gemäß einer der Ausführungsformen 1 bis 4, wobei die Komponente A einen Gewichtsanteil an phenolischen OH-Gruppen von 20 bis 500 ppm aufweist.
7. Zusammensetzung gemäß einer der Ausführungsformen 1 bis 4, wobei die Komponente A einen Gewichtsanteil an phenolischen OH-Gruppen von 30 bis 150 ppm aufweist.
8. Zusammensetzung gemäß einer der vorherigen Ausführungsformen, wobei die Komponente C Struktureinheiten abgeleitet von mindestens einem weiteren mit Styrol copolymerisierbaren Epoxidgruppen-freien Vinylmonomeren enthält.
9. Zusammensetzung gemäß Ausführungsform 8, wobei das Gewichtsverhältnis der von Styrol zu von den mit Styrol copolymerisierbaren Epoxidgruppen-freien Vinylmonomeren abgeleiteten Struktureinheiten in Komponente C im Bereich von 85:15 bis 60:40 liegt.
10. Zusammensetzung gemäß einer der Ausführungsformen 8 oder 9, wobei Komponente C Struktureinheiten abgeleitet von Acrylnitril enthält.
11. Zusammensetzung gemäß einer der vorherigen Ausführungsformen, wobei das Epoxidgruppen-haltige Vinylmonomer Glycidylmethacrylat ist.
12. Zusammensetzung gemäß einer der vorherigen Ausführungsformen, wobei die Komponente C einen Epoxidgehalt gemessen nach ASTM D 1652-11 in Dichlormethan von 0,1 bis 5 Gew.-%, Gew.-% aufweist.
13. Zusammensetzung gemäß einer der vorherigen Ausführungsformen 1 bis 11, wobei die Komponente C einen Epoxidgehalt gemessen nach ASTM D 1652-11 in Dichlormethan von 0,3 bis 3 Gew.-%, Gew.-% aufweist.
14. Zusammensetzung gemäß einer der vorherigen Ausführungsformen 1 bis 11, wobei die Komponente C einen Epoxidgehalt gemessen nach ASTM D 1652-11 in Dichlormethan von 1 bis 3 Gew.-%, Gew.-% aufweist.
15. Zusammensetzung gemäß einer der vorherigen Ausführungsformen, wobei als Komponente C ein Block- oder Pfropfpolymer eingesetzt wird, welches Struktureinheiten abgeleitet von Styrol und mindestens einem Epoxidgruppen enthaltenden Vinylmonomeren enthält.
16. Zusammensetzung gemäß einer der vorherigen Ausführungsformen, wobei als Komponente C ein Block- oder Pfropfpolymer eingesetzt wird, hergestellt durch radikalisch initiierte Polymerisation von Styrol und einem Epoxidgruppen-haltigem Vinylmonomeren und optional weiteren copolymerisierbaren Epoxidgruppen-freien Vinylmonomeren in Anwesenheit eines Polymers ausgewählt aus der Gruppe bestehend aus Polycarbonat, Polyester, Polyestercarbonat, Polyolefin, Polyacrylat und Polymethacrylat.
17. Zusammensetzung gemäß einer der Ausführungsformen 1 bis 15, wobei als Komponente C ein Block- oder Pfropfpolymer eingesetzt wird, hergestellt durch Reaktion eines Epoxidgruppen-haltigen Styrolpolymers mit einem OH-Gruppen enthaltenden Polymeren ausgewählt aus der Gruppe bestehend aus Polycarbonat, Polyester oder Polyestercarbonat.
18. Zusammensetzung gemäß einer der vorherigen Ausführungsformen, wobei das bei der Herstellung der Komponente B1 eingesetzte organische Oxidationsmittels ausgewählt ist aus der Gruppe bestehend aus Di-tert.-butylperoxid, Cumolhydroperoxid, Dicyclohexylpercarbonat, tert.-Butylhydroperoxid, p-Menthanhydroperoxid und das Reduktionsmittel ausgewählt ist aus der Gruppe bestehend aus Salzen von Sulfinsäure, Salzen der schwefligen Säure, Natriumdithionit, Natriumsulfit, Natriumhyposulfit, Natriumhydrogensulfit, Ascorbinsäure sowie deren Salzen, Natriumformaldehydsulfoxylat, und Mono- und Dihydroxyaceton.
19. Zusammensetzung gemäß einer der vorherigen Ausführungsformen, wobei das bei der Herstellung der Komponente B1 eingesetzte Redox-Initiatorsystem tert.-Butylhydroperoxid als organisches Oxidationsmittel und Natriumascorbat als Reduktionsmittel enthält.
20. Zusammensetzung gemäß einer der vorherigen Ausführungsformen, wobei die Komponente C kein Pfropfpolymer mit Kern-Schale-Struktur und einer kautschukelastischen Pfropfgrundlage enthält.
21. Zusammensetzung gemäß einer der vorherigen Ausführungsformen, wobei als Komponente A nur aromatisches Polycarbonat eingesetzt wird.
22. Zusammensetzung gemäß einer der vorherigen Ausführungsformen, wobei als Komponente A nur aromatisches Polycarbonat auf Basis von Bisphenol A eingesetzt wird.
23. Zusammensetzung gemäß einer der vorherigen Ausführungsformen, enthaltend 40 bis 80 Gew.-% der Komponente A, 10 bis 50 Gew.-% der Komponente B, 1 bis 8 Gew.-% der Komponente C und 0,1 bis 15 Gew.-% der Komponente D.
24. Zusammensetzung gemäß einer der vorherigen Ausführungsformen, enthaltend 50 bis 75 Gew.-% der Komponente A, 15 bis 45 Gew.-% der Komponente B, 2 bis 7 Gew.-% der Komponente C und 0,2 bis 10 Gew.-% der Komponente D.
25. Zusammensetzung gemäß einer der vorherigen Ausführungsformen, wobei die Komponente B mindestens 20 Gew.-% an Komponente B1 enthält.
26. Zusammensetzung gemäß einer der vorherigen Ausführungsformen, wobei die Komponente B mindestens 40 Gew.-% an Komponente B1 enthält.
27. Zusammensetzung gemäß einer der vorherigen Ausführungsformen wobei die Komponente D mindestens einen Schlagzähmodifikatoren hergestellt durch Masse-, Lösungs-, oder Suspensionspolymerisation enthält.
28. Zusammensetzung gemäß Ausführungsform 27, wobei die Schlagzähmodifikatoren hergestellt durch Masse-, Lösungs-, oder Suspensionspolymerisation einen mittleren Teilchendurchmesser D50 von 0,4 bis 0,7 µm aufweisen.
29. Zusammensetzung gemäß einer der vorherigen Ausführungsformen, wobei der Anteil von Schlägzähmodifikatoren hergestellt durch Masse-, Lösungs-, oder Suspensionspolymerisation höchstens 50 Gew.-% bezogen auf die Summe der Schlagzähmodifikatoren hergestellt durch Masse-, Lösungs-, oder Suspensionspolymerisation und Komponente B1 beträgt.
30. Zusammensetzung gemäß einer der vorherigen Ausführungsformen, wobei der Anteil von Schlägzähmodifikatoren hergestellt durch Masse-, Lösungs-, oder Suspensionspolymerisation höchstens 20 Gew.-% bezogen auf die Summe der Schlagzähmodifikatoren hergestellt durch Masse-, Lösungs-, oder Suspensionspolymerisation und Komponente B1 beträgt.
31. Zusammensetzung gemäß einer der vorherigen Ausführungsformen, die frei sind von Schlägzähmodifikatoren hergestellt durch Masse-, Lösungs-, oder Suspensionspolymerisation.
32. Zusammensetzung gemäß einer der vorherigen Ausführungsformen, wobei alle Schlagzähmodifikatoren hergestellt durch Emulsionspolymerisation gemäß B1 und optional D einen mittleren Teilchendurchmesser D50 von 0,1 bis 0,6 µm aufweisen.
33. Zusammensetzung gemäß einer der vorherigen Ausführungsformen, wobei als Bestandteil der Komponente D eine oder mehrere weitere von Komponente B1 verschiedene Schlagzähmodifikatoren enthalten sind, hergestellt durch Emulsionspolymerisation unter Verwendung eines Initiatorsystems, welches von den Redox-Initiatorsystemen, die bei der Herstellung der Komponente B1 eingesetzt werden, verschieden sind und wobei deren Anteil höchstens 30 Gew.-% bezogen auf die Summe aller Schlagzähmodifikatoren hergestellt durch Emulsionspolymerisation beträgt.
34. Zusammensetzung gemäß einer der vorherigen Ausführungsformen, die frei sind von weiteren von Komponente B1 verschiedenen Schlagzähmodifikatoren hergestellt durch Emulsionspolymerisation.
35. Zusammensetzung gemäß einer der vorherigen Ausführungsformen, bestehend zu mindestens 80 Gew.-% aus den Bestandteilen A bis D.
36. Zusammensetzung gemäß einer der vorherigen Ausführungsformen, bestehend zu mindestens 90 Gew.-% aus den Bestandteilen A bis D.
37. Zusammensetzung gemäß einer der vorherigen Ausführungsformen, bestehend aus den Bestandteilen A bis D.
38. Formmasse erhalten durch Compoundieren der Bestandteile einer Zusammensetzung nach einer der Ausführungsformen 1 bis 37 bei Temperaturen im Bereich von 200 bis 350 °C.
39. Formmasse erhalten durch Compoundieren der Bestandteile einer Zusammensetzung nach einer der Ausführungsformen 1 bis 37 bei Temperaturen im Bereich von 240 bis 320 °C.
40. Formmasse erhalten durch Compoundieren der Bestandteile einer Zusammensetzung nach einer der Ausführungsformen 1 bis 37 bei Temperaturen im Bereich von 260 bis 300 °C.
41. Verwendung einer Zusammensetzung gemäß einer der Ausführungsformen 1 bis 37 oder einer Formmassen gemäß einer der Ausführungsformen 38 bis 40 zur Herstellung von Formkörpern.
42. Formkörper erhältlich aus einer Zusammensetzung gemäß einer der Ausführungsformen 1 bis 37 oder aus einer Formmasse gemäß einer der Ausführungsformen 38 bis 40.

### Beispiele

### Komponente A:

Lineares Polycarbonat auf Basis Bisphenol-A mit einem gewichtsgemittelten Molekulargewicht M_{w} von 29.000 g/mol (bestimmt durch GPC in Methylenchlorid gegen einen BPA-PC-Standard) und einem Gewichtsanteil an phenolischen OH-Gruppen von 150 ppm.

### Komponente B-1

### Abmischung aus

50 Gew.-% eines im sauren Milieu mit Magnesiumsulfat gefällten Pfropfpolymerisats vom ABS-Typ, hergestellt durch Pfropfung im Emulsionspolymerisationsverfahren, unter Verwendung von Kaliumperoxodisulfat als Polymerisationsinitiator, von 52 Gew.-Teilen eines Gemisches aus Styrol und Acrylnitril im Gew.-%-Verhältnis von 72:28 auf 48 Gew.-Teilen eines teilchenförmigen partikulären vernetzten Polybutadienkautschuks mit einem Teilchendurchmesser bestimmt durch Ultrazentrifugation von dso = 0,3 µm
und
50 Gew.-% eines Styrol-Acrylnitril-Copolymerisats hergestellt durch Massepolymerisation von Styrol und Acrylnitril im Gew.-%-Verhältnis von 76:24, mit einem gewichtsgemittelten Molekulargewicht Mw von 100 kg/mol (bestimmt durch GPC bei 20°C in Tetrahydrofuran mit Polystyrol als Standard).

Aufgrund der Art des Aufarbeitungsverfahrens des in B-1 zum Einsatz kommenden Pfropfpolymerisats vom ABS-Typ, welches in keiner vollständigen Entfernung des Fällmediums resultiert, enthält dieses Pfropfpolymerisat Brönstedt-saure Verbindungen als herstellungsbedingte Verunreinigung.

### Komponente B-2:

### Abmischung aus

50 Gew.-% eines im sauren Milieu mit Magnesiumsulfat gefällten Pfropfpolymerisats vom ABS-Typ, hergestellt durch Pfropfung im Emulsionspolymerisationsverfahren, unter Verwendung eines Redox-Polymerisationsinitiatorsystems aus tert.-Butylhydroperoxid und Natriumascorbat, von 44 Gew.-Teilen eines Gemisches aus Styrol und Acrylnitril im Gew.-%-Verhältnis von 72:28 auf 56 Gew.-Teilen eines teilchenförmigen partikulären vernetzten Polybutadienkautschuks mit einem Teilchendurchmesser bestimmt durch Ultrazentrifugation von dso = 0,35 µm
und
50 Gew.-% eines Styrol-Acrylnitril-Copolymerisats hergestellt durch Massepolymerisation von Styrol und Acrylnitril im Gew.-%-Verhältnis von 76:24, mit einem gewichtsgemittelten Molekulargewicht Mw von 100 kg/mol (bestimmt durch GPC bei 20°C in Tetrahydrofuran mit Polystyrol als Standard).

Aufgrund der Art des Aufarbeitungsverfahrens des in B-2 zum Einsatz kommenden Pfropfpolymerisats vom ABS-Typ, welches in keiner vollständigen Entfernung des Fällmediums resultiert, enthält dieses Pfropfpolymerisat Brönstedt-saure Verbindungen als herstellungsbedingte Verunreinigung.

### Komponente C:

Modiper™ CL430-G (NOF Corporation, Japan): Pfropfcopolymer enthaltend Blöcke aus Polycarbonat und Blöcke aus Glycidylmethacrylat-Styrol-Acrylnitril-Terpolymer, welches erhalten wurde durch mit einem Peroxid initiierte radikalische Pfropfpolymerisation von 30 Gew.-% eines Monomerengemischs aus Styrol, Acrylnitril und Glycidylmethacrylat im Verhältnis 15:6:9 Gew.-% in Gegenwart von 70 Gew.-% linearem Polycarbonat auf Basis von Bisphenol A.

Der Epoxidgehalt der Komponente C gemessen nach ASTM D 1652-11 in Dichlormethan beträgt 2,4 Gew.-%.

### Komponente D-1:

Pentaerythrittetrastearat als Gleit-/Entformungsmittel

### Komponente D-2:

Industrieruß, Black pearls™ 800(Cabot Corporation).

### Komponenten D-3:

Thermostabilisator, Irganox™ B900 (Gemisch aus 80% Irgafos™ 168 (Tris(2,4-di-tert-butylphenyl)-phosphit) und 20% Irganox™ 1076 (2,6-Di-tert-butyl-4-(octadecanoxycarbonylethyl)-phenol); BASF (Ludwigshafen, Deutschland).

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 260°C. Die Formkörper wurden bei Massetemperaturen von 260°C bzw. 300°C und einer Werkzeugtemperatur von 80°C auf einer Spritzgießmaschine Typ Arburg 270 E hergestellt.

Die IZOD-Kerbschlagzähigkeit wurde bestimmt gemäß ISO 180/A (Version von 2013) bei Temperaturen im Bereich von Raumtemperatur bis -50°C in Intervallen von 10°C an jeweils zehn Prüfkörpern der Abmessung 80 mm x 10 mm x 4mm, die bei einer Massetemperatur im Spritzguss von 260°C gefertigt wurden. Die Zäh-Spröd-Übergangstemperatur wurde ermittelt als diejenige Temperatur, bei der 20 bis 80% der Prüfkörper einen Zähbruch und jeweils 80-20% der Prüfkörper einen Sprödbruch zeigen. Zeigten bei einer Messtemperatur T₁ mindestens neun der zehn Prüfstäbe einen Zähbruch und bei der nächsttieferen Temperatur T₂ nur maximal einer der zehn Prüfstäbe einen solchen Zähbruch, so wurde als Zäh-Spröd-Übergangstemperatur der Mittelwert dieser beiden Temperaturen T=(T₁+T₂)/2 definiert. Als Zähbruch wurde der Erfahrung nach dabei jedes Schlagexperiment mit einer gemessenen Kerbschlagzähigkeit von mindestens 30 kJ/m², als Sprödbruch jedes Schlagexperiment mit einer gemessenen Kerbschlagzähigkeit von kleiner als 30 kJ/m² gewertet.

Der Oberflächenglanz wurde gemessen in Reflexion unter einem Betrachtungswinkel von 60° mit einem Glanzmessgerät vom Typ Haze-Gloss von BYK-Gardner GmbH (Geretsried, Deutschland) nach DIN 67530 (Version von 1982) an bei Massetemperaturen im Spritzguss von 260°C und 300°C gefertigten Prüfkörpern der Abmessung 60 mm x 40 mm x 4 mm. Es wurde ein hochglanzpoliertes Spritzgusswerkzeug verwendet. Im Rahmen der vorliegenden Anmeldung wird unter Glanzgrad der unter diesen Bedingungen bestimmte Wert verstanden.

Als Maß für die Verarbeitungsstabilität wird die Variabilität des Glanzgrades mit Änderung der Verarbeitungsparameter (hier der Massetemperatur) im Spritzguss herangezogen, wobei ein gute Verarbeitungsstabilität dann gegeben ist, wenn über ein weites Verarbeitungsfenster (hier Intervall der Massetemperaturen) ein weitestgehend konstanter Glanzgrad erzielt wird, das heißt die Glanzgradänderung bei Änderung der Massetemperatur von 260°C auf 300°C möglichst gering ist.

**Tabelle 1**

| **Komponente (Gew.-Teile)** | **V1** | **V2** | **V3** | **4** |
|---|---|---|---|---|
| A | 70 | 70 | 70 | 70 |
| B-1 | 30 | | 27 | |
| B-2 | | 30 | | 27 |
| C | | | 3 | 3 |
| D-1 | 0,75 | 0,75 | 0,75 | 0,75 |
| D-2 | 0,50 | 0,50 | 0,50 | 0,50 |
| D-3 | 0,10 | 0,10 | 0,10 | 0,10 |

| **Eingenschaften** | | | | |
|---|---|---|---|---|
| IZOD- Kerbschlagzähigkeit (-30°C) [kJ/m2] | 29 | 36 | 37 | 36 |
| Zäh-Spröd-Übergangstemperatur im IZOD-Kerbschlagversuch [°C] | -25 | -35 | -35 | -35 |
| Glanzzahl bei 60° (260°C) | 102 | 101 | 90 | 101 |
| Glanzzahl bei 60° (300°C) | 102 | 90 | 85 | 100 |
| Glanzgradänderung (260°C zu 300°C) | 0% | -11% | -6% | -1% |

Die Daten in Tabelle 1 zeigen, dass Polycarbonat-Zusammensetzungen enthaltend Komponente C und ein Pfropfpolymerisat hergestellt durch Emulsionspolymerisation dann eine vorteilhafte Kombination aus guter Tieftemperatur-Kerbschlagzähigkeit, hohem Glanzgrad und hoher Verarbeitungsstabilität aufweisen, wenn bei der Emulsionspolymerisation ein Redox-Initiatorsystem eingesetzt wird (Beispiel 4). Wird stattdessen ein anderes Initiatorsystem (Kaliumperoxodisulfat) verwendet (V3), so wird ein geringerer Glanzgrad und eine höhere Glanzgradvariation bei Änderung der Verarbeitungstemperatur beobachtet. Ohne die Komponente C ist entweder (bei Einsatz einer Kaliumperoxodisulfat-Initiierung) die Tieftemperaturzähigkeit unzureichend (V1) oder (bei Initiierung mit einem Redox-System, V2) die Verarbeitungsstabilität mangelhaft.

## Patentansprüche

1. Zusammensetzung zur Erzeugung einer thermoplastischen Formmasse, wobei die Zusammensetzung folgende Bestandteile enthält oder aus diesen besteht,
A) 30 bis 90 Gew.-% mindestens eines Polymers ausgewählt aus der Gruppe bestehend aus aromatischem Polycarbonat und aromatischem Polyestercarbonat,
B) 5 bis 65 Gew.-% Polymer, das frei ist von Epoxidgruppen, bestehend aus
B1) kautschukmodifiziertem Vinyl(co)polymerisat hergestellt im Emulsionspolymerisationsverfahren unter Verwendung eines Redox-Initiatorsystems bestehend aus einem organischen Oxidationsmittel und einem Reduktionsmittel und
B2) optional kautschukfreiem Vinyl(co)polymerisat,
C) 0,5 bis 10 Gew.-% eines Polymers enthaltend auf Styrol und einem Epoxidgruppen-haltigem Vinylmonomer zurückgehende Strukturelemente,
D) 0 bis 20 Gew.-% eines oder mehrerer weiterer Additive,
wobei die Komponente C ein Gewichtsverhältnis von auf Styrol zu auf Epoxidgruppen-haltigem Vinylmonomer zurückgehenden Strukturelementen von 100:1 bis 1:1 aufweist.

2. Zusammensetzung gemäß Anspruch 1, wobei als Komponente A nur aromatisches Polycarbonat eingesetzt wird.

3. Zusammensetzunge gemäß Anspruch 1 oder 2, wobei die Komponente A einen Gewichtsanteil an phenolischen OH-Gruppen von 10 bis 1000 ppm aufweist.

4. Zusammensetzung gemäß einem der vorherigen Ansprüche, wobei die Komponente C Struktureinheiten abgeleitet von mindestens einem weiteren mit Styrol copolymerisierbaren Epoxidgruppen-freien Vinylmonomeren enthält.

5. Zusammensetzung gemäß Anspruch 4, wobei das Gewichtsverhältnis der von Styrol zu von den mit Styrol copolymerisierbaren Epoxidgruppen-freien Vinylmonomeren abgeleiteten Struktureinheiten in Komponente C im Bereich von 85:15 bis 60:40 liegt.

6. Zusammensetzung gemäß einem der vorherigen Ansprüche, wobei das Epoxidgruppen-haltige Vinylmonomer Glycidylmethacrylat ist.

7. Zusammensetzungen gemäß einem der vorherigen Ansprüche, wobei die Komponente C einen Epoxidgehalt gemessen nach ASTM D 1652-11 in Dichlormethan von 0,1 bis 5 Gew.-%, Gew.-% aufweist.

8. Zusammensetzung gemäß einem der vorherigen Ansprüche, wobei als Komponente C ein Block-oder Pfropfpolymer eingesetzt wird, welches Struktureinheiten abgeleitet von Styrol und mindestens einem Epoxidgruppen enthaltenden Vinylmonomeren enthält.

9. Zusammensetzung gemäß einem der vorherigen Ansprüche, wobei als Komponente C ein Block-oder Pfropfpolymer eingesetzt wird, hergestellt durch radikalisch initiierte Polymerisation von Styrol und einem Epoxidgruppen-haltigem Vinylmonomeren und optional weiteren copolymerisierbaren Epoxidgruppen-freien Vinylmonomeren in Anwesenheit eines Polymers ausgewählt aus der Gruppe bestehend aus Polycarbonat, Polyester, Polyestercarbonat, Polyolefin, Polyacrylat und Polymethacrylat.

10. Zusammensetzung gemäß einem der Ansprüche 1 bis 8, wobei als Komponente C ein Block-oder Pfropfpolymer eingesetzt wird, hergestellt durch Reaktion eines Epoxidgruppen-haltigen Styrolpolymers mit einem OH-Gruppen enthaltenden Polymeren ausgewählt aus der Gruppe bestehend aus Polycarbonat, Polyester oder Polyestercarbonat.

11. Zusammensetzung gemäß einem der vorherigen Ansprüche, wobei das bei der Herstellung der Komponente B1 eingesetzte organische Oxidationsmittels ausgewählt ist aus der Gruppe bestehend aus Di-tert.-butylperoxid, Cumolhydroperoxid, Dicyclohexylpercarbonat, tert.-Butylhydroperoxid, p-Menthanhydroperoxid und das Reduktionsmittel ausgewählt ist aus der Gruppe bestehend aus Salzen von Sulfinsäure, Salzen der schwefligen Säure, Natriumdithionit, Natriumsulfit, Natriumhyposulfit, Natriumhydrogensulfit, Ascorbinsäure sowie deren Salzen, Natriumformaldehydsulfoxylat sowie Mono- und Dihydroxyaceton.

12. Zusammensetzung gemäß einem der vorherigen Ansprüche, wobei das bei der Herstellung der Komponente B1 eingesetzte Redox-Initiatorsystem tert.-Butylhydroperoxid als organisches Oxidationsmittel und Natriumascorbat als Reduktionsmittel enthält.

13. Formmasse erhalten durch Compoundieren der Bestandteile einer Zusammensetzung gemäß einem der Ansprüche 1 bis 12 bei Temperaturen im Bereich von 200 bis 350 °C.

14. Verwendung einer Zusammensetzung gemäß einem der Ansprüche 1 bis 12 oder einer Formmasse gemäß Anspruch 13 zur Herstellung von Formkörpern.

15. Formkörper erhältlich aus einer Zusammensetzung gemäß einem der Ansprüche 1 bis 12 oder aus einer Formmasse gemäß Anspruch 13.

## Claims

1. Composition for production of a thermoplastic moulding compound, wherein the composition comprises or consists of the following constituents:
A) 30% to 90% by weight of at least one polymer selected from the group consisting of aromatic polycarbonate and aromatic polyester carbonate,
B) 5% to 65% by weight of polymer free of epoxy groups, consisting of
B1) rubber-modified vinyl (co)polymer prepared by the emulsion polymerization method using a redox initiator system consisting of an organic oxidizing agent and a reducing agent and
B2) optionally rubber-free vinyl (co)polymer,
C) 0.5% to 10% by weight of a polymer containing structural elements deriving from styrene and an epoxy-containing vinyl monomer,
D) 0% to 20% by weight of one or more further additives, wherein component C has a weight ratio of structural elements deriving from styrene to those deriving from epoxy-containing vinyl monomer of 100:1 to 1:1.

2. Composition according to Claim 1, wherein component A used is aromatic polycarbonate only.

3. Composition according to Claim 1 or 2, wherein component A has a proportion by weight of phenolic OH groups of 10 to 1000 ppm.

4. Composition according to any of the preceding claims, wherein component C contains structural units derived from at least one further styrene-copolymerizable vinyl monomer free of epoxy groups.

5. Composition according to Claim 4, wherein the weight ratio of the structural units derived from styrene to those derived from styrene-copolymerizable vinyl monomer free of epoxy groups in component C is in the range from 85:15 to 60:40.

6. Composition according to any of the preceding claims, wherein the epoxy-containing vinyl monomer is glycidyl methacrylate.

7. Compositions according to any of the preceding claims, wherein component C has an epoxy content measured according to ASTM D 1652-11 in dichloromethane of 0.1% to 5% by weight.

8. Composition according to any of the preceding claims, wherein component C used is a block or graft polymer containing structural units derived from styrene and at least one vinyl monomer containing epoxy groups.

9. Composition according to any of the preceding claims, wherein component C used is a block or graft polymer prepared by free-radically initiated polymerization of styrene and an epoxy-containing vinyl monomer and optionally further copolymerizable vinyl monomers free of epoxy groups in the presence of a polymer selected from the group consisting of polycarbonate, polyester, polyester carbonate, polyolefin, polyacrylate and polymethacrylate.

10. Composition according to any of Claims 1 to 8, wherein component C is a block or graft polymer prepared by reaction of an epoxy-containing styrene polymer with a polymer containing OH groups which is selected from the group consisting of polycarbonate, polyester and polyester carbonate.

11. Composition according to any of the preceding claims, wherein the organic oxidizing agent used in the preparation of component B1 is selected from the group consisting of di-tert-butyl peroxide, cumene hydroperoxide, dicyclohexyl percarbonate, tert-butyl hydroperoxide and p-menthane hydroperoxide, and the reducing agent is selected from the group consisting of salts of sulfinic acid, salts of sulfurous acid, sodium dithionite, sodium sulfite, sodium hyposulfite, sodium hydrogensulfite, ascorbic acid and salts thereof, sodium formaldehydesulfoxylate and mono- and dihydroxyacetone.

12. Composition according to any of the preceding claims, wherein the redox initiator system used in the preparation of component B1 comprises tert-butyl hydroperoxide as organic oxidizing agent and sodium ascorbate as reducing agent.

13. Moulding compound obtained by compounding the constituents of a composition according to any of Claims 1 to 12 at temperatures in the range from 200 to 350°C.

14. Use of a composition according to any of Claims 1 to 12 or of a moulding compound according to Claim 13 for production of mouldings.

15. Moulding obtainable from a composition according to any of Claims 1 to 12 or from a moulding compound according to Claim 13.

## Revendications

1. Composition pour la production d'une masse à mouler thermoplastique, la composition contenant les ingrédients suivants ou étant constituée de ceux-ci,
A) 30 à 90 % en poids d'au moins un polymère choisi dans le groupe constitué par un polycarbonate aromatique et un polyestercarbonate aromatique,
B) 5 à 65 % en poids d'un polymère, qui est exempt de groupes époxyde, constitué
B1) d'un (co)polymérisat vinylique modifié par un caoutchouc préparé dans un procédé de polymérisation en émulsion avec utilisation d'un système d'initiateur rédox constitué d'un agent d'oxydation organique et d'un agent de réduction et
B2) éventuellement d'un (co)polymérisat vinylique exempt de caoutchouc,
C) 0,5 à 10 % en poids d'un polymère contenant des éléments structuraux provenant du styrène et d'un monomère vinylique contenant des groupes époxyde,
D) 0 à 20 % en poids d'un ou plusieurs additifs supplémentaires,
le composant C présentant un rapport pondéral d'éléments structuraux provenant du styrène sur ceux provenant d'un monomère vinylique contenant des groupes époxyde de 100:1 à 1:1.

2. Composition selon la revendication 1, dans laquelle, en tant que composant A, seulement un polycarbonate aromatique est utilisé.

3. Composition selon la revendication 1 ou 2, le composant A présentant une proportion en poids de groupes OH phénoliques de 10 à 1 000 ppm.

4. Composition selon l'une quelconque des revendications précédentes, le composant C contenant des motifs structuraux issus d'au moins un monomère vinylique supplémentaire, exempt de groupes époxyde, copolymérisable avec le styrène.

5. Composition selon la revendication 4, le rapport pondéral des motifs structuraux issus du styrène sur ceux issus de monomères vinyliques, exempts de groupes époxyde, copolymérisables avec le styrène dans le composant C se situant dans la plage de 85:15 à 60:40.

6. Composition selon l'une quelconque des revendications précédentes, le monomère vinylique contenant des groupes époxyde étant le méthacrylate de glycidyle.

7. Composition selon l'une quelconque des revendications précédentes, le composant C présentant une teneur en époxyde mesurée selon la norme ASTM D1652-11 dans le dichlorométhane de 0,1 à 5 % en poids.

8. Composition selon l'une quelconque des revendications précédentes, un polymère à blocs ou greffé étant utilisé en tant que composant C, qui contient des motifs structuraux issus du styrène et d'au moins un monomère vinylique contenant des groupes époxyde.

9. Composition selon l'une quelconque des revendications précédentes, un polymère à blocs ou greffé étant utilisé en tant que composant C, qui est préparé par polymérisation initiée de manière radicalaire de styrène et d'un monomère vinylique contenant des groupes époxyde et éventuellement de monomères vinyliques copolymérisables supplémentaires, exempts de groupes époxyde, en présence d'un polymère choisi dans le groupe constitué par un polycarbonate, un polyester, un polyestercarbonate, une polyoléfine, un polyacrylate et un polyméthacrylate.

10. Composition selon l'une quelconque des revendications 1 à 8, un polymère à blocs ou greffé étant utilisé en tant que composant C, qui est préparé par réaction d'un polymère de styrène contenant des groupes époxyde avec un polymère contenant des groupes OH choisi dans le groupe constitué par un polycarbonate, un polyester et un polyestercarbonate.

11. Composition selon l'une quelconque des revendications précédentes, l'agent d'oxydation organique utilisé lors de la préparation du composant B1 étant choisi dans le groupe constitué par le peroxyde de di-tert-butyle, l'hydroperoxyde de cumène, le percarbonate de dicyclohexyle, l'hydroperoxyde de tert-butyle, l'hydroperoxyde de p-menthane et l'agent de réduction étant choisi dans le groupe constitué par des sels d'acide sulfinique, des sels d'acide sulfurique, le dithionite de sodium, le sulfite de sodium, l'hyposulfite de sodium, l'hydrogénosulfite de sodium, l'acide ascorbique ainsi que ses sels, le formaldéhydesulfoxylate de sodium ainsi que la monohydroxyacétone et la dihydroxyacétone.

12. Composition selon l'une quelconque des revendications précédentes, le système d'initiateur rédox utilisé lors de la préparation du composant B1 contenant de l'hydroperoxyde de tert-butyle en tant qu'agent d'oxydation organique et de l'ascorbate de sodium en tant qu'agent de réduction.

13. Masse à mouler obtenue par compoundage des ingrédients d'une composition selon l'une quelconque des revendications 1 à 12 à des températures dans la plage de 200 à 350 °C.

14. Utilisation d'une composition selon l'une quelconque des revendications 1 à 12 ou d'une masse à mouler selon la revendication 13 pour la préparation de corps moulés.

15. Corps moulé pouvant être obtenu à partir d'une composition selon l'une quelconque des revendications 1 à 12 ou d'une masse à mouler selon la revendication 13.
